# EUROPÄISCHE PATENTSCHRIFT

(11) **EP 1 395 764 B1**
(45) Veröffentlichungstag und Bekanntmachung des Hinweises auf die Patenterteilung: **12.12.2007**
(21) Anmeldenummer: 02742715.2
(22) Anmeldetag: 07.05.2002
(51) Int. Cl.: F16H 55/08, B23C 3/00, B23F 1/06, B22F 5/08

(54) **TELLERRAD**
RING GEAR
COURONNE

(30) Priorität: 23.05.2001 DE 10125067
(43) Veröffentlichungstag der Anmeldung: 10.03.2004
(73) Patentinhaber: ROBERT BOSCH GMBH, 70442 Stuttgart (DE)
(72) Erfinder: BARTH, Walter, 70771 Leinfelden-Echterdingen (DE)
(74) Vertreter: Daub, Thomas
(86) Internationale Anmeldenummer: PCT/DE2002/001636
(87) Internationale Veröffentlichungsnummer: WO 2002/095265

(56) Entgegenhaltungen:
- EP-A- 0 421 106
- EP-A- 1 023 960
- DE-C- 19 544 573
- GB-A- 282 784
- US-A- 3 345 883
- US-A- 3 524 361

## Beschreibung

### Stand der Technik

Die Erfindung geht insbesondere aus von einem Tellerrad nach dem Oberbegriff des Anspruchs 1. Ein derartiges Tellerrad ist allgemein bekannt.

Grundsätzlich wird angestrebt, Tellerräder und mit den Tellerrädern korrespondierende Ritzel bereitzustellen, die eine hohe Standzeit und ein geräuscharmes Kämmen gewährleisten.

Bei der Herstellung wird angestrebt, in der Regel kostenintensive spanende Fertigungsverfahren durch kostengünstige spanlose Fertigungsverfahren zu ersetzen, wobei dem Sintern eine hohe Bedeutung zukommt.

Ein für das Sintern verwendbares Stempelwerkzeug besitzt eine Negativform von einer Verzahnung des herzustellenden Tellerrads bzw. Ritzels und wird vorteilhaft mit einer Elektrode hergestellt.

Entsprechende Elektroden werden üblicherweise entweder auf einer Kegelradverzahnungsmaschine in einem Abwälzverfahren hergestellt oder in einem numerischen Kopierverfahren drahterodiert. Beim Drahterodieren ist eine beliebige Gestaltung einer Zahngrundausrundung möglich. Allerdings können bei diesem Verfahren keine längsballigen Zahnflanken erzeugt werden.

Bei üblichen Abwälzverfahren, beispielsweise durch Fräsen oder Hobeln, können zwar längsballige Zahnflanken erzeugt werden, der Gestaltung der Zahngrundausrundung sind jedoch Grenzen gesetzt. Da sich eine Zahnlücke in Längsrichtung normalerweise radial nach innen bzw. von einer sogenannten Ferse zu einer sogenannten Zehe eines Zahns verjüngt, arbeiten diese Verfahren mit jeweils separaten Werkzeugen für sich gegenüberliegende Zahnflanken in einer Zahnlücke, die gegeneinander in einem entsprechenden Zahnlückenwinkel angestellt sind. Die Werkzeuge besitzen über der Länge der sich verjüngenden Zahnlücke ein konstantes Profil. Wird ein zu großer Radius des Werkzeugs bzw. von Schneiden des Werkzeugs zur Herstellung der Zahngrundausrundung gewählt, wird die Zahnlücke im Bereich der Zehe verschnitten.

### Vorteile der Erfindung

Die Erfindung geht aus von einem Tellerrad mit Zähnen und Zahnlücken, wobei die Zähne über Zahnflanken mit einem korrespondierenden Ritzel in Eingriff bringbar sind.

Es wird vorgeschlagen, daß die Zahnflanken nach einem letzten Eingriffspunkt des Ritzels vom Zahnkopf in Richtung Zahngrund gegenüber Standardzahnflanken einer vom Ritzel beschriebenen, in einen Normalschnitt projizierten Trochoide angenähert sind. Es können dadurch Hebelarme, über die Kräfte auf die Zähne wirken, verkürzt, an einem bruchgefährdetsten Querschnitt des Zahns kann ein großer Radius erzielt und damit die Belastbarkeit erhöht und die Lebensdauer verlängert werden. Unter Standardzahnflanken sollen Evolventenflanken entsprechende Flanken eines Tellerrads verstanden werden.

Ist das Tellerrad in einem Sinterprozeß hergestellt, kann eine kostengünstige Herstellung großer Stückzahlen sichergestellt werden.

In einer weiteren Ausgestaltung der Erfindung wird vorgeschlagen, daß die Zahnlücken im Querschnitt im Bereich des Zahngrunds spitz zulaufend und besonders vorteilhaft spitzbogenförmig ausgeführt sind. Die Erfindung geht von der Erkenntnis aus, daß bei herkömmlichen Preßvorgängen in einem Sinterprozeß in den Zähnen aufgrund einer verbleibenden Gesamthöhe ein weitaus geringeres Verdichtungsverhältnis erreicht wird als im Bereich des Zahngrunds. Zusätzlich behindern Zusammenballungen eines Sinterpulvers, die während des Pressens zuerst im Bereich der höheren Verdichtung, also im Bereich des Zahngrunds entstehen, ein "Nachfließen" des Sinterpulvers in den Zahnquerschnitt. Mit der erfindungsgemäßen Lösung kann ein Pulverstau im Bereich des Zahngrunds zumindest weitgehend vermieden, ein vorteilhaftes Nachfließen von Sinterpulver in den Zahn und eine gleichmäßige Dichte im Bereich des Zahngrunds und im Zahn erreicht werden, wodurch die Leistungsdichte erhöht und die Lebensdauer gesteigert werden kann. Unter spitz zulaufenden Zahnlücken sind auch Zahnlücken zu verstehen, die stumpfartig ausgebildet sind oder eine Spitze mit einem Radius aufweisen, wobei eine die Spitze bildende Stumpffläche eine Breite bis zu ca. einem viertel Modul oder der Radius bis zu ca. einem viertel Modul sein kann.

Sind die Zahnflanken längsballig ausgeführt, kann eine hohe Tragfähigkeit und ein geräuscharmes Abwälzen erzielt werden.

Zur Herstellung des Tellerrads verwendete Stempelwerkzeuge besitzen vorteilhaft eine im wesentlichen entsprechende Negativform und Elektroden zur Herstellung des Stempelwerkzeugs eine dem Tellerrad im wesentlichen entsprechende Form.

Um ein Stempelwerkzeug mit einer gewünschten Form zu erreichen, kann ein Standardstempelwerkzeug oder eine Standardelektrode entsprechend in einem Nachbearbeitungsverfahren angepaßt werden.

Besonders vorteilhaft wird jedoch das Stempelwerkzeug und insbesondere die Elektrode bzw. deren Zähne und Zahnlücken durch ein bahngesteuertes Formfräsen hergestellt, und zwar vorzugsweise mit einer CNC-gesteuerten Fräsmaschine mit einer C-Achse. Entsprechende Fräsmaschinen sind kostengünstig erhältlich und weitverbreitet. Es können gegenüber herkömmlichen Verfahren hinsichtlich der Gestaltung der Zahnflanken und des Zahngrunds Freiheitsgrade geschaffen werden. Es können mit einem entsprechenden Fräser, insbesondere mit einem Zahnformfräser, der Fräszähne aufweist, die zu ihrem Zahnkopf spitz und vorteilhaft spitzbogenförmig zulaufend ausgeführt sind, erfindungsgemäße spitz zulaufend ausgeführte Zahnlücken und gleichzeitig längsballige Zahnflanken realisiert werden.

Eine vorteilhafte Längsballigkeit kann einfach realisiert werden, indem ein Fräskopf auf einer konvex gekrümmten Bahn zur Herstellung eines konvex gekrümmten Zahngrunds verfahren wird.

Durch die CNC-Steuerung kann eine hohe Präzision und Wiederholgenauigkeit erreicht werden, so daß eine Herstellung hochgenau verzahnter Stempelwerkzeuge bzw. Elektroden möglich ist. Ferner ist die CNC-Fräsmaschine gegenüber einer Kegelrad-Wälzfräs- oder -Hobelmaschine einfach und schnell einstellbar.

### Zeichnung

Weitere Vorteile ergeben sich aus der folgenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer schematischen Draufsicht eines Tellerrads,
- Fig. 2: einen Schnitt entlang der Linie II-II in Fig. 1 in vergrößerter Darstellung,
- Fig. 3: einen vergrößerten Ausschnitt einer Zahnlücke aus Fig. 2 mit einer von einem Ritzel beschriebenen Trochoide in einen Normalschnitt projiziert,
- Fig. 4: das Tellerrad aus Fig. 1 bei einem Preßvorgang in einer Seitenansicht,
- Fig. 5: einen vergrößerten Ausschnitt einer Zahnlücke bei einem Nachpreßvorgang,
- Fig. 6: einen Ausschnitt eines Fräskopfs mit einem Zahnformfräser bei der Herstellung einer Elektrode und
- Fig. 7: einen Schnitt entlang der Linie VII-VII in Fig. 6.

### Beschreibung der Ausführungsbeispiele

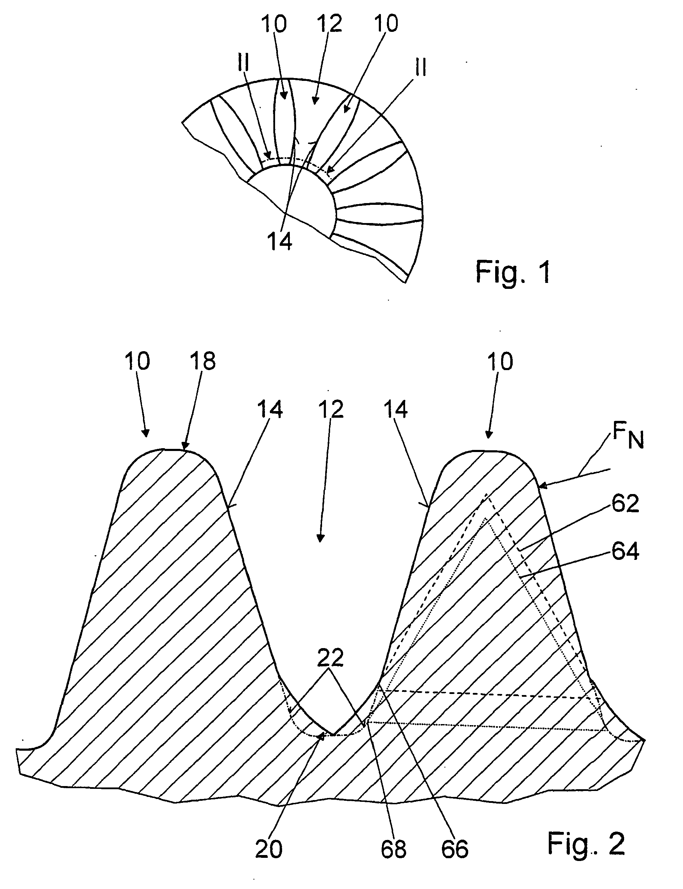

Fig. 1 zeigt einen Ausschnitt einer schematischen Draufsicht eines erfindungsgemäßen Tellerrads mit Zähnen 10 und Zahnlükken 12, wobei die Zähne 10 über Zahnflanken 14 mit einem korrespondierenden, nicht näher dargestellten Ritzel in Eingriff bringbar sind.

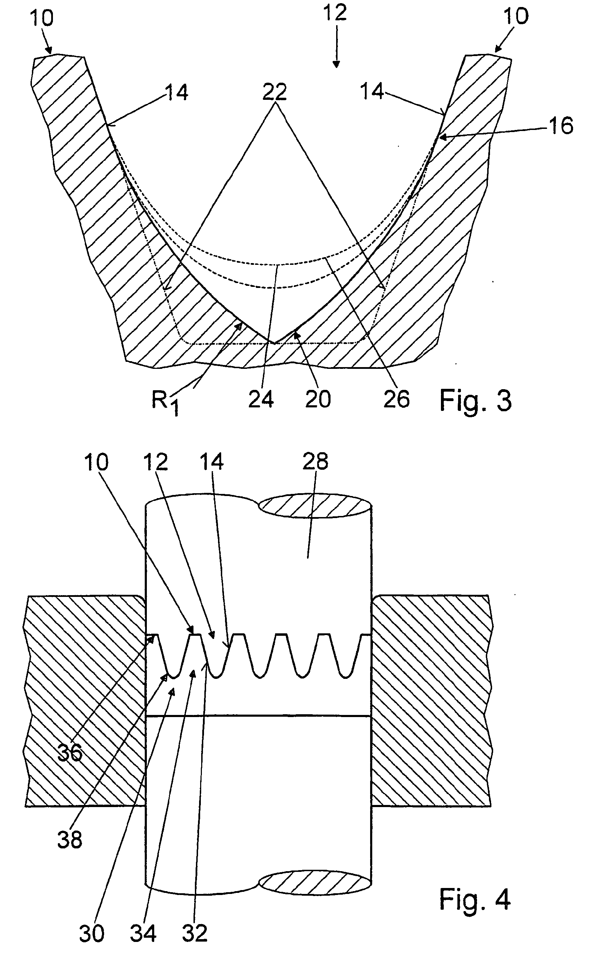

Die Zahnflanken 14 sind nach einem letzten Eingriffspunkt 16 des Ritzels vom Zahnkopf 18 in Richtung Zahngrund 20 gegenüber Standardzahnflanken 22 einer vom Ritzel beschriebenen, in einen Normalschnitt projizierten Trochoide 24, 26 angenähert, und zwar ist die Zahnlücke 12 im Querschnitt im Bereich des Zahngrunds 20 spitzbogenförmig ausgeführt (Fig. 2 und 3).

Die Trochoide 24 wird von einem Ritzel mit einer Nennzahnhöhe und die Trochoide 26 wird von einem Ritzel mit einer Nennzahnhöhe plus 0,1 mm beschrieben. Die Zahnflanken 14 besitzen nach dem letzten Eingriffspunkt 16 in Richtung Zahngrund 20 einen Radius R₁ von ca. 1,6 mm und sind vor dem Eingriffspunkt 16 vom Zahnkopf 18 in Richtung Zahngrund 20 bzw. in einem aktiven Teilbereich vorteilhaft gerade ausgeführt. Die Zahnflanken 14 sind längsballig ausgeführt, wie dies in Fig. 1 überzogen dargestellt zu erkennen ist.

In Fig. 2 sind in einen der beiden dargestellten Zähne 10 zwei Dreiecke 62, 64 zur Festigkeitsberechnung eingezeichnet, wobei das Dreieck 62 dem erfindungsgemäßen Tellerrad zugeordnet und das Dreieck 64 einem Standardtellerrad mit Standardzahnflanken 22 zugeordnet ist. Die Dreiecke 62, 64 besitzen Schenkel, die 30°-Tangenten in bruchgefährdetsten Stellen 66, 68 des Zahns 10 bilden. Die dem erfindungsgemäßen Tellerrad zugeordnete Stelle 66 ist gegenüber der dem Standardtellerrad zugeordneten Stelle 68 näher dem Zahnkopf 18 angeordnet, wodurch eine auf den Zahn 10 wirkende Normkraft F_{N} auf diese Stelle 66 mit einem kleineren Hebelarm wirken kann als auf die Stelle 68. Ferner wird durch die erfindungsgemäße Lösung in der Stelle 66 gegenüber der Stelle 68 ein vorteilhaft größerer Radius erzielt.

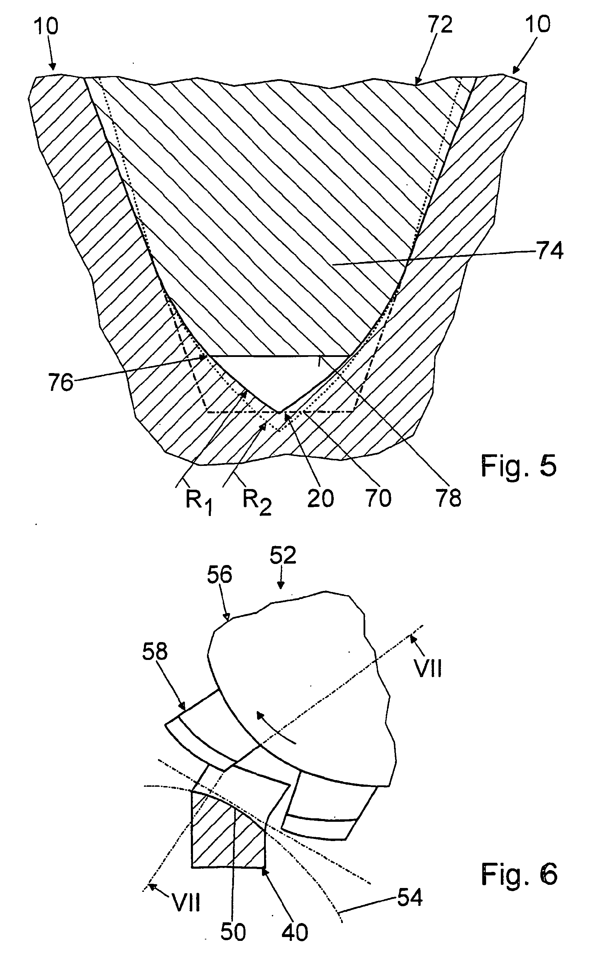

Das Tellerrad ist in einem Sinterprozeß hergestellt und wird dabei zuerst mit einem Stempelwerkzeug 28 mit Zähnen 30, deren Zahnflanken 32 Zahnlücken 34 begrenzen, vorgepreßt (Fig. 4). Das Stempelwerkzeug 28 besitzt eine dem Tellerrad im wesentlichen entsprechende Negativform, und zwar sind die Zahnflanken 32 nach einer Stelle, die dem letzten Eingriffspunkt 16 zugeordnet ist, vom Zahngrund 36 in Richtung Zahnkopf 38 gegenüber Standardzahnflanken einer Trochoide angenähert. Die Zähne 30 sind im Querschnitt im Bereich des Zahnkopfs 38 spitzbogenförmig ausgeführt. Das Stempelwerkzeug 28 besitzt vorteilhaft geringfügig längere Zähne 30 als das Tellerrad, im dargestellten Ausführungsbeispiel ca. um 0,1 mm, wie dies in Fig. 5 an der mit 70 angedeuteten Kontur des Stempelwerkzeugs 28 zu erkennen ist. Das Stempelwerkzeug 28 besitzt im Bereich seiner Zahnköpfe 38 einen Radius R₂ von ca. 2 mm.

Nach einem Vorpressen mit dem Stempelwerkzeug 28 wird das Tellerrad mit einem Nachpreßstempel 72 nachgepreßt, dessen Zähne 74 ohne Spitze bzw. am Zahnkopf 76 stumpfartig mit einer Stumpffläche 78 ausgeführt sind. Mit dem Nachpressen kann ein weiterer Dichteausgleich und ein besonders vorteilhaftes Gefüge erreicht werden.

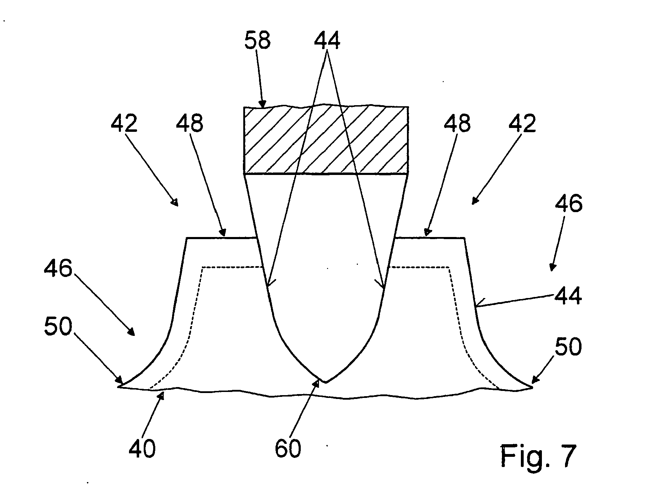

Das Stempelwerkzeug 28 wird mit einer Elektrode 40 mit Zähnen 42, deren Zahnflanken 44 Zahnlücken 46 begrenzen, hergestellt, die eine Negativform des Stempelwerkzeugs 28 bzw. im wesentlichen eine dem Tellerrad entsprechende Form aufweist (Fig. 6 und 7). Die Zahnflanken 44 sind nach einer Stelle, die dem letzten Eingriffspunkt 16 zugeordnet ist, vom Zahnkopf 48 in Richtung Zahngrund 50 im Querschnitt gegenüber Standardzahnflanken einer Trochoide angenähert. Die Zahnlükken 46 sind im Querschnitt im Bereich des Zahngrunds 50 spitzbogenförmig ausgeführt.

Die Elektrode 40 bzw. deren Zähne 42 und Zahnlücken 46 werden durch ein bahngesteuertes Formfräsen in einem Fräsverfahren hergestellt, und zwar mit einer CNC-gesteuerten Fräsmaschine mit einer C-Achse. Dabei wird ein Zahnformfräser 56 verwendet, dessen Fräszähne 58 zu ihrem Zahnkopf 60 spitz zulaufend bzw. spitzbogenförmig ausgeführt sind.

Ein Fräskopf 52 bzw. der Zahnformfräser 56 arbeitet sich auf einer Bahn 54 entlang eines Fußkegels der Elektrode 40, der eine konvexe Krümmung überlagert ist, durch die Elektrode 40. Durch die Krümmung wird eine Längsballigkeit der Zahnflanken 44 erzeugt. Der Fußkegel ist gegenüber einem konventionellen Fußkegel eines proportionalen Tellerrads in der Weise geneigt, daß gegenüber einem proportionalen Zahn an der Ferse eine größere und an der Zehe eine kleinere Zahnhöhe vorliegt. Durch diese Neigung wird eine notwendige Verjüngung der Zahnlücke 46 in der Teilkegelebene erreicht. Nach der Fertigstellung einer Zahnlücke 46 wird an der C-Achse weitergeteilt und die nächste Zahnlücke 46 gefräst, bis sämtliche Zähne 42 fertiggestellt sind.

Entsprechend dem Tellerrad sind die Zahnflanken 44 in einem dem aktiven Teilbereich zugeordneten Bereich gerade ausgeführt, wodurch auf einfache Weise Koordinaten und Normalen von mehreren Flankenpunkten berechnet und mit einem Koordinaten-Meßgerät die Zähne geprüft werden können, ohne daß dafür eine spezielle Kegelradmeßtechnik erforderlich wäre.

Elektroden für das Ritzel werden weiterhin vorteilhaft in einem Abwälzverfahren hergestellt. Bei dem Abwälzverfahren entspricht ein verwendetes Werkzeug im wesentlichen dem erfindungsgemäßen Tellerrad bzw. ein Werkzeugzahn einem Tellerradzahn. Der Werkzeugzahn arbeitet sich dabei auf einer Bahn durch das Ritzel, die im wesentlichen einer Bahn eines Tellerradzahns während eines Betriebs eines Kegelradgetriebes mit dem Tellerrad und dem Ritzel entspricht. Die Bahn der Werkzeugzähne hat allerdings in Flankenrichtung zur Erzeugung längsballiger Ritzelflanken eine konkave Krümmung.

### Bezugszeichen

- 10: Zahn
- 12: Zahnlücke
- 14: Zahnflanke
- 16: Eingriffspunkt
- 18: Zahnkopf
- 20: Zahngrund
- 22: Standardzahnflanke
- 24: Trochoide
- 26: Trochoide
- 28: Stempelwerkzeug
- 30: Zahn
- 32: Zahnflanke
- 34: Zahnlücke
- 36: Zahngrund
- 38: Zahnkopf
- 40: Elektrode
- 42: Zahn
- 44: Zahnflanke
- 46: Zahnlücke
- 48: Zahnkopf
- 50: Zahngrund
- 52: Fräskopf
- 54: Bahn
- 56: Fräser
- 58: Fräszahn
- 60: Zahnkopf
- 62: Dreieck
- 64: Dreieck
- 66: Stelle
- 68: Stelle
- 70: Kontur
- 72: Nachpreßstempel
- 74: Zahn
- 76: Zahnkopf
- 78: Stumpffläche

- R₁: Radius
- R₂: Radius
- F_{N}: Normkraft

## Patentansprüche

1. Tellerrad mit Zähnen (10) und Zahnlücken (12), wobei die Zähne (10) über Zahnflanken (14) mit einem korrespondierenden Ritzel in Eingriff bringbar sind und die Zahnflanken (14) jeweils einen ersten Abschnitt umfassen, der mit einer Evolventenflanke übereinstimmt, und jeweils einen zweiten Abschnitt umfassen, der nach einem letzten Eingriffspunkt (16) des Ritzels, vom Zahnkopf (18) in Richtung Zahngrund (20) betrachtet angeordnet ist, **dadurch gekennzeichnet, daß** der zweite Abschnitt von einer Evolventenflanke abweicht und gegenüber Evolventenflanken von Standardzahnflanken (22) einer Bahn einer Trochoide (24, 26) des Ritzels angenähert ist, wobei die Bahn durch den ersten Abschnitt der Zahnflanken (14) bestimmt ist und die Bahn in einen Normalschnitt projiziert eine Trochoide (24, 26) bildet.

2. Tellerrad nach Anspruch 1, **dadurch gekennzeichnet, daß** es in einem Sinterprozeß hergestellt ist.

3. Tellerrad nach Anspruch 2, **dadurch gekennzeichnet, daß** die Zahnlücken (12) im Bereich des Zahngrunds (20) im Querschnitt spitz zulaufend ausgeführt sind.

4. Tellerrad nach Anspruch 3, **dadurch gekennzeichnet, daß** die Zahnlücken (12) im Querschnitt im Bereich des Zahngrunds (20) spitzbogenförmig ausgeführt sind.

5. Tellerrad nach einem der vorhergehenden Ansprüche, **dadurch gekennzeichnet, daß** die Zahnflanken (14) längsballig ausgeführt sind.

6. Stempelwerkzeug (28) zur Herstellung eines Tellerrads nach einem der vorhergehenden Ansprüche mit Zähnen (30), deren Zahnflanken (32) Zahnlücken (34) begrenzen und wobei die Zahnflanken (32) jeweils einen ersten Abschnitt umfassen, der mit einer Evolventenflanke übereinstimmt, und jeweils einen zweiten Abschnitt umfassen, der vor einem letzten Eingriffspunkt (16) vom Zahnkopf (38) in Richtung Zahngrund (36) betrachtet angeordnet ist, **dadurch gekennzeichnet, daß** der zweite Abschnitt von einer Evolventenflanke abweicht und gegenüber Evolventenflanken von Standardzahnflanken einer Bahn einer Trochoide angenähert ist, wobei die Bahn durch den ersten Abschnitt der Zahnflanken (32) bestimmt ist und die Bahn in einen Normalschnitt projiziert eine Trochoide bildet.

7. Stempelwerkzeug (28) nach Anspruch 6, **dadurch gekennzeichnet, daß** die Zähne (30) im Querschnitt im Bereich des Zahnkopfs (38) spitz zulaufend ausgeführt sind.

8. Stempelwerkzeug (28) nach Anspruch 7, **dadurch gekennzeichnet, daß** die Zähne (30) im Querschnitt im Bereich des Zahnkopfs (38) spitzbogenförmig ausgeführt sind.

9. Elektrode (40) zur Herstellung eines Stempelwerkzeugs (28) nach einem der Ansprüche 6 bis 8 mit Zähnen (42), deren Zahnflanken (44) Zahnlücken (46) begrenzen und wobei die Zahnflanken (44) jeweils einen ersten Abschnitt umfassen, der mit einer Evolventenflanke übereinstimmt, und jeweils einen zweiten Abschnitt umfassen, der nach einem letzten Eingriffspunkt (16) vom Zahnkopf (48) in Richtung Zahngrund (50) betrachtet angeordnet ist, **dadurch gekennzeichnet, daß** der zweite Abschnitt von einer Evolventenflanke abweicht und gegenüber Evolventenflanken von Standardzahnflanken einer Bahn einer Trochoide angenähert ist, wobei die Bahn durch den ersten Abschnitt der Zahnflanken (44) bestimmt ist und die Bahn in einen Normalschnitt projiziert eine Trochoide bildet.

10. Elektrode (40) nach Anspruch 9, **dadurch gekennzeichnet, daß** die Zahnlücken (46) im Querschnitt im Bereich des Zahngrunds (50) spitz zulaufend ausgeführt sind.

11. Elektrode (40) nach Anspruch 10, **dadurch gekennzeichnet, daß** die Zahnlücken (46) im Querschnitt im Bereich des Zahngrunds (50) spitzbogenförmig ausgeführt sind.

## Claims

1. Ring gear having teeth (10) and tooth spaces (12), it being possible for the teeth (10) to be brought into engagement with a corresponding pinion via tooth flanks (14), and the tooth flanks (14) comprising in each case a first section which coincides with an involute flank and comprising in each case a second section which is arranged after a final engagement point (16) of the pinion, as viewed from the tooth tip (18) in the direction of the tooth base (20), **characterized in that** the second section deviates from an involute flank and, in comparison with involute flanks of standard tooth flanks (22), approximates a course of a trochoid (24, 26) of the pinion, the course being determined by the first section of the tooth flanks (14) and the course forming a trochoid (24, 26) in a manner which is projected into a perpendicular section.

2. Ring gear according to Claim 1, **characterized in that** it is manufactured in a sintering process.

3. Ring gear according to Claim 2, **characterized in that** the tooth spaces (12) are configured in the region of the tooth base (20) with a cross section which tapers to a point.

4. Ring gear according to Claim 3, **characterized in that** the tooth spaces (12) are configured with an ogival cross section in the region of the tooth base (20).

5. Ring gear according to one of the preceding claims, **characterized in that** the tooth flanks (14) are configured with longitudinal crowning.

6. Ram tool (28) for manufacturing a ring gear according to one of the preceding claims having teeth (30), the tooth flanks (32) of which delimit tooth spaces (34) and the tooth flanks (32) comprising in each case a first section which coincides with an involute flank and comprising in each case a second section which is arranged in front of a final engagement point (16), as viewed from the tooth tip (38) in the direction of the tooth base (36), **characterized in that** the second section deviates from an involute flank and, in comparison with involute flanks of standard tooth flanks, approximates a course of a trochoid, the course being determined by the first section of the tooth flanks (32) and the course forming a trochoid in a manner which is projected into a perpendicular section.

7. Ram tool (28) according to Claim 6, **characterized in that** the teeth (30) are configured in the region of the tooth tip (38) with a cross section which tapers to a point.

8. Ram tool (28) according to Claim 7, **characterized in that** the teeth (30) are configured with an ogival cross section in the region of the tooth tip (38).

9. Electrode (40) for manufacturing a ram tool (28) according to one of Claims 6 to 8 having teeth (42), the tooth flanks (44) of which delimit tooth spaces (46) and the tooth flanks (44) comprising in each case a first section which coincides with an involute flank and comprising in each case a second section which is arranged after a final engagement point (16), as viewed from the tooth tip (48) in the direction of the tooth base (50), **characterized in that** the second section deviates from an involute flank and, in comparison with involute flanks of standard tooth flanks, approximates a course of a trochoid, the course being determined by the first section of the tooth flanks (44) and the course forming a trochoid in a manner which is projected into a perpendicular section.

10. Electrode (40) according to Claim 9, **characterized in that** the tooth spaces (46) are configured in the region of the tooth base (50) with a cross section which tapers to a point.

11. Electrode (40) according to Claim 10, **characterized in that** the tooth spaces (46) are configured with an ogival cross section in the region of the tooth base (50).

## Revendications

1. Couronne de différentiel comportant des dents 10 et des entre dents 12,
des dents 10 étant en prise par des flancs de dent 14 avec un pignon correspondant et les flancs de dent 14 comportent chacun un premier segment correspondant à un flanc de développante et un second segment qui se trouve au dernier point d'interaction 16 du pignon considéré de la tête de dent 18 en direction du fond de dent 20,
**caractérisée en ce que** le second segment diffère d'un flanc de développante et se rapproche, par rapport au flanc de développante des flancs de dent standard 22, d'une trajectoire de trochoïde 24, 26 des pignons, la trajectoire étant définie par le premier segment du flanc de dent 14 et la trajectoire en coupe normale se projetant suivant une trochoïde 24, 26.

2. Couronne de différentiel selon la revendication 1,
**caractérisée en ce qu'**
elle est fabriquée par frittage.

3. Couronne de différentiel selon la revendication 2,
**caractérisée en ce que**
les entre-dents 12 se terminent avec une section en pointe au niveau du fond de dent 20.

4. Couronne de différentiel selon la revendication 3,
**caractérisée en ce que**
les entre-dents 12 ont une section en forme d'arc en ogive au niveau du fond de dent 20.

5. Couronne de différentiel selon l'une quelconque des revendications précédentes,
**caractérisée en ce que**
les flancs de dent 14 sont bombés longitudinalement.

6. Outil en forme de poinçon 28 pour fabriquer une couronne de différentiel selon l'une quelconque des revendications précédentes, comportant des dents 30 dont les flancs 32 délimitent des intervalles de dent 34 et les flancs de dent 32 comportent chacun un premier segment correspondant à un flanc de développante et un second segment qui est vu à partir du dernier point de contact 16 de la tête de dent 38 en direction du fond de dent 36,
**caractérisé en ce que**
le second segment diffère d'un flanc de développante et vis-à-vis d'un flanc de développante correspondant à un flanc de dent standard, il se rapproche d'une trajectoire de trochoïde, la trajectoire étant définie par le premier segment des flancs de dent 32 et cette trajectoire forme une trochoïde par projection par coupe normale.

7. Poinçon 28 selon la revendication 6,
**caractérisé en ce qu'**
en section dans la zone de la tête de dent 38, les dents 30 se terminent en pointe.

8. Poinçon 28 selon la revendication 7,
**caractérisé en ce qu'**
en section au niveau de la tête de dent 38, les dents 30 sont en forme d'ogive.

9. Electrode 40 pour fabriquer un poinçon 28 selon l'une quelconque des revendications 6 à 8, comportant les dents 42 dont les flancs 44 délimitent des entre dents 46 et les flancs de dent 44 comportent chacun un premier segment correspondant à un flanc de développante et un second segment qui correspond au dernier point de contact 16 de la tête de dent 48 considérée en direction du fond de dent 50,
**caractérisée en ce que**
le second segment diffère d'un flanc de développante et se rapproche par rapport à des flancs de développante de dent standard, d'une trajectoire de trochoïde, la trajectoire étant définie par le premier segment du flanc de dent 44 et cette trajectoire forme une trochoïde par projection d'une section normale.

10. Electrode 40 selon la revendication 9,
**caractérisée en ce que**
les entre dents 46 ont une section qui termine en pointe au niveau du fond de dent 50.

11. Electrode 40 selon la revendication 10,
**caractérisée en ce qu'**
en section dans la zone du fond de dent 50 les flancs de dent 46 ont une forme d'ogive.
